**Europäisches Patentamt**

**European Patent Office**

**Office européen des brevets**

(19)

(11) Veröffentlichungsnummer: **0 058 973**

**B1**

(12) **EUROPÄISCHE PATENTSCHRIFT**

(45) Veröffentlichungstag der Patentschrift:
**12.10.88**

(51) Int. Cl.⁴: **B 05 C 13/00,** B 05 D 7/20,
B 65 G 23/22

(21) Anmeldenummer: **82101305.9**

(22) Anmeldetag: **19.02.82**

(54) **Verfahren und Vorrichtung zum Beschichten von Endlosformkörpern.**

(30) Priorität: **20.02.81 DE 3106283**

(43) Veröffentlichungstag der Anmeldung:
**01.09.82 Patentblatt 82/35**

(45) Bekanntmachung des Hinweises auf die Patenterteilung:
**12.10.88 Patentblatt 88/41**

(84) Benannte Vertragsstaaten:
**DE FR GB IT SE**

(56) Entgegenhaltungen:
**AT-A-342 738
DE-A-1 959 873
DE-A-2 826 906
GB-A-436 002
GB-A-1 238 998**

**MECHANICAL HANDLING, Band 58, Nr. 9,
September 1971, Seiten 72-74, London, GB;
A.W.DAVEY: "Is the linear motor's potential being
ignored?"**

(73) Patentinhaber: **Laudenklos, Manfred,
Pommernstrasse 8, D-6369 Schöneck 2 (DE)**
Patentinhaber: **May, Hardo Dipl.- Ing.,
Gleiwitzstrasse 36, D-3300 Braunschweig (DE)**
Patentinhaber: **Kaupert, Gerhard Dipl.- Ing., Im
Moor 7, D-3300 Braunschweig (DE)**

(72) Erfinder: **Laudenklos, Manfred, Pommernstrasse 8,
D-6369 Schöneck 2 (DE)**
Erfinder: **May, Hardo, Gleiwitzstrasse 36, D-3300
Braunschweig (DE)**
Erfinder: **Kaupert, Gerhard, Im Moor 7, D-3300
Braunschweig (DE)**
Erfinder: **Flake, Horst, Waldstrasse 28, D-6116
Eppertshausen (DE)**
Erfinder: **Weh, Herbert, Dr., Wöhlerstrasse 20,
D-3300 Braunschweig (DE)**

EP 0 058 973 B1

## Beschreibung

Die Erfindung betrifft ein Verfahren und eine Vorrichtung zur Beschichtung von chemisch oder mechanisch vorbehandelten, gegebenefalls mit einem Haftvermittler versehenen metallischen, gezogenen Endlosformkörpern mit Kunststoff oder dergleichen durch direkten Kontakt des erhitzten Endlosformkörpers mit Kunststoffpulver, das nach dem Anfritten einer bestimmten Kunststoffpulvermenge an der heißen Oberfläche zu einer gleichmäßigen Kunststoffschicht durchgeschmolzen und der so beschichtete Endlosformkörper anschließend abgekühlt wird. Dies ist beispielsweise in der DE-A-2 826 906 beschrieben.

Durch die Beschichtung metallischer Oberflächen mit Kunststoff ist ein Verbundwerkstoff entstanden, der immer breitere Anwendung findet. In zunehmendem Maße werden kunststoffbeschichtete Drähte, Drahtgewebe, Bleche, Bänder, Profile usw. angeboten. Gleiches gilt für erdverlegte Stahlrohre. Hier ersetzt die Kunststoffbeschichtung mehr und mehr die wesentlich aufwendigere Gummierung oder Heißasphaltierung mit anschließenden Bandagieren. Auch Stahlrohre mit kleinem Durchmesser, wie sie vorwiegend im Haus- und Apparatebau verwendet werden, werden bereits seit längerer Zeit mit kunststoffbeschichteter Außenoberfläche angeboten.

Für die Herstellung der Beschichtung insbesondere von Rohren mit Kunststoffen existiert eine Vielzahl von Verfahren, bei denen die Beschichtung entweder direkt durch Tauchen in eine Kunststofflösung oder durch Auftragsschmelzen geschehen kann, wobei entweder der Kunststoff als Schmelze auf das zu beschichtende Rohr extrudiert oder durch direkten Kontakt des erhitzten Rohres mit Kunststoffpulver, das an der heißen Rohroberfläche anfrittet und zu einer gleichmäßigen Kunststoffschicht durchschmilzt, aufgebracht wird. Alle Pulverauftragsschmelzverfahren, wie Wirbelsintern, elektrostatisches Pulverlackieren, Schleudersintern etc ermöglichen eine einwandfreie Beschichtung von Endlosformkörpern bei relativ kleinen Transportgeschwindigkeiten. Durch Rotation der Endlosformkörper während der Herstellung der Beschichtung ist es möglich, eine gleichmäßige Dicke der Kunststoffschicht zu erzielen.

Die Vorrichtung zur Durchführung eines solchen Verfahrens besteht, wie beispielsweise in der AT-A-342 738 dargestellt, im wesentlichen aus einer Induktionsspule, in der der zu beschichtende Endlosformkörper auf die für das Anfritten des Kunststoffpulvers erforderliche Temperatur erwärmt wird. In einem nachgeordneten Beschichtungskopf wird der erwärmte Endlosformkörper weiter von einem turbulent strömenden Kunststoffpulver-Luft-Gemisch umspült. Der mit Kunststoff befrittete Endlosformkörper läuft nun durch eine zweite Induktionsspule, in der dieser so hoch erwärmt wird, daß der angefrittete Kunststoff in einer anschließenden Freistrecke - in der der Endlosformkörper berührungslos geführt wird - bis zum Eintritt in eine Kühlvorrichtung gleichmäßig durchschmilzt. Der Endlosformkörper verläßt die Anlage durch eine geeignete Abläng- oder Haspelvorrichtung. Dickwandige Endlosformkörper können bereits beim Durchlauf durch die erste Induktionsspule so hoch erwärmt werden, daß nach dem Verlassen des Beschichtungskopfes der aufgefrittete Kunststoff ohne eine zusätzliche Erwärmung während des Transports durch die Freistrecke durchschmilzt.

Um eine möglichst hohe Beschichtungsgeschwindigkeit zu erzielen, ist aus der DE-A-2 826 906 eine Transportvorrichtung bekannt, die aus zwei von einer mit zwei Kurventrommeln versehenen Welle angetriebenen, mit Ziehbacken ausgerüsteten Ziehschlitten besteht. Die Steuerung dieser Ziehanlage ist so ausgelegt, daß während der Übergabe des Endlosformkörpers von einem Ziehschlitten auf den anderen beide zunächst eine kurze Strecke gemeinsam im Eingriff sind, bevor der ablösende Ziehschlitten im beginnenden Rücklauf des Endlosformkörper freigibt. Bei derartigen Beschichtungsvorrichtungen ist es jedoch erforderlich, daß auf den Endlosformkörper hohe Zugkräfte aufgebracht werden, denen beispielsweise dünnwandige Rohre geringeren Durchmessers nicht mehr standhalten, um ein durchhängen des Endlosformkörpers in der Freistrecke und damit die Neigung zur Ausbildung von Schwingungen, die zu einer Berührung des Endlosformkörpers mit dem Beschichtungskopf und damit zu einer Zerstörung der Kunststoffbeschichtung führen können, zu vermeiden.

Ausgehend von diesen Nachteilen ist es die Aufgabe der vorliegenden Erfindung, das eingangs beschriebene Verfahren so zu gestalten, daß der gezogene Endlosformkörper ohne Anwendung hoher Zugkräfte, jedoch ohne Herabsetzung der relativ hohen Beschichtungsgeschwindigkeit, durch die Beschichtungsanlage transportierbar ist.

Die Lösung dieser Aufgabe besteht darin, daß der Endlosformkörper mit Hilfe steuerbarer elektromagnetischer Felder berührungslos durch die Beschichtungsvorrichtung getragen und geführt wird.

Dabei ist es gleichzeitig möglich, daß der Endlosfomkörper mit Hilfe steuerbarer elektromagnetischer Wanderfelder zu transportieren ist.

Nach einem weiteren Merkmal der Erfindung kann der Endlosformkörper auch mit Hilfe steuerbarer elektromagnetischer Felder auf Kunststoffschmelztemperatur erhitzt werden.

Die Vorrichtung zur Durchführung des Verfahrens besteht aus jeweils wenigstens einem mindestens in der Freistrecke der Beschichtungsvorrichtung angeordneten vertikalen und horizontalen Elektromagnetjochpaar, die den Endlosformkörper frei schwebend tragen.

Der Transport des Endlosformkörpers erfolgt vorzugsweise durch der Kühlvorrichtung nachgeordnete Treibrollen, auf die jedoch verzichtet werden kann, wenn elektromagnetische Wanderfelder erzeugende Magneten eingesetzt sind.

Wirken auf den Endlosformkörper äußere Kräfte, wie die Schwerkraft oder durch den Betriebsmechanismus erzeugte Schwingungserregungen, so melden entsprechend angeordnete kontaktlose Sensoren die beginnende Auslenkung an die Regelelektronik. Diese beschickt über Leistungssteller die Spulen der Elektromagnete einzeln mit dem entsprechenden Strom, um die Störungen auszugleichen.

Die Erfindung ist im folgenden anhand von drei Figuren der Zeichnungen näher erläutert.

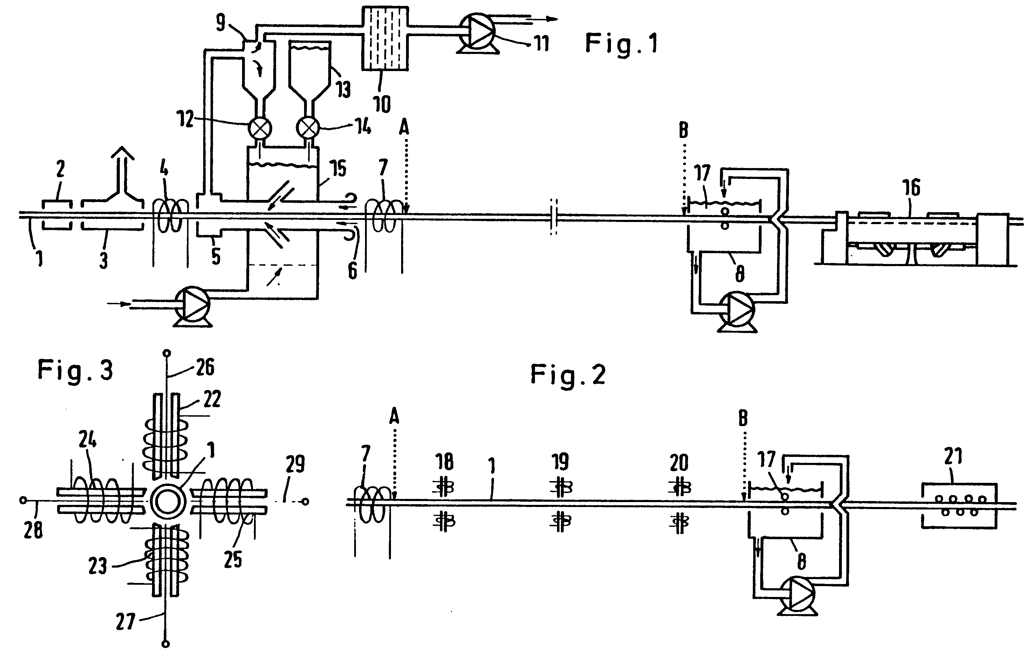

Durch die von der Austrittsöffnung 6 angesaugte Fremdluft wird das in den Beschichtungskopf 5 eingepreßte Kunststoffpulver beschleunigt und gleichmäßig verteilt. Nach Durchströmen des Beschichtungskopfes 5 wird das Kunststoffpulver im Zyklon 9 von der Luft getrennt, die über das Filter 10 von dem Gebläse 11 abgesaugt wird. Das im Zyklon 9 abgeschiedene Kunststoffpulver wird über die kontinuierliche Schleusenvorrichtung 12 in das Wirbelbett 15 zurückgeführt. Eine dem verbrauchten Kunststoffpulver äquivaltente Menge wird aus dem Pulversilo 13 über die Schleuse 14 dem Wirbelbett 15 chargenweise zugeführt. Hierzu siehe Figur 1.

## Ausführungsbeispiel

Die in Fig. 2 dargestellte Beschichtungsvorrichtung unterscheidet sich von der Beschichtungsvorrichtung gemäß Fig. 1 dadurch , daß in der Freistrecke zwischen den Punkten A und B drei Magnetjochpaare 18, 19, 20 zum berührungslosen Führen und Tragen des Endlosrohres 1 angeordnet sind. Nach dem Wasserbad 8 ist eine einfache Treibrollenvorrichtung 21 für den Transport des Endlosrohres angebracht.

Die Fig. 3 zeigt die kreuzweise Anordnung von zwei Magnetjochpaaren, ein vertikales Magnetjochpaar 22, 23, ausgestattet mit Abstandssensoren 24, 25 sowie ein horizontales Magnetjochpaar 26, 27 mit den Abstandssensoren 28, 29. Die beiden Magnetjochpaare führen und tragen das Endlosrohr 1 schwingungsfrei in der Beschichtungsanlage.

Die mit der Erfindung erzielten Vorteile besteht darin, daß die elektromagnetischen Felder einen völlig schwingungsfreien Transport der Endlosformkörper auch bei geringer Zugkraft der Treibrollenvorrichtung von nur 200 bis 300 kp gewährleisten. Auf die Anordnung einer hohe Zugkräfte erzeugenden Transportvorrichtung kann damit verzichtet werden. Ferner ist die Möglichkeit des Aufschaukelns von Störschwingungen, die zu einem Berühren des Endlosformkörpers mit der Austrittsöffnung des Beschichtungskopfes führen können, ausgeschlossen. Durch den Einsatz mehrerer Doppelmagnetjochen kann die zwischen der Austrittsöffnung und der Kühlstation beliebig verlängert werden, was bei langsam durchschmelzenden Kunststoffen oder bei dickwandigen Rohren größerer Durchmesser von Bedeutung ist.

## Patentansprüche

1. Verfahren zur Beschichtung von chemisch oder mechanisch vorbehandelten, gegebenenfalls mit einem Haftvermittler versehenen metallischen, gezogenen Endlosformkörpern mit Kunststoff oder dergleichen durch direkten Kontakt des erhitzten Endlosformkörpers mit Kunststoffpulver, das nach dem Anfritten einer bestimmten Kunststoffpulvermenge an der heißen Oberfläche zu einer gleichmäßigen Kunststoffschicht durchgeschmolzen und der so beschichtete Endlosformkörper anschließend abgekühlt wird, dadurch gekennzeichnet, daß der Endlosformkörper mit Hilfe steuerbarer elektromagnetischer Felder berührungslos getragen und geführt wird.

2. Verfahren nach Anspruch 1, dadurch gekennzeichnet, daß der Endlosformkörper mit Hilfe steuerbarer elektromagnetischer Wanderfelder transportiert wird.

3. Verfahren nach Anspruch 1 und/oder 2, dadurch gekennzeichnet, daß der Endlosformkörper mit Hilfe steuerbarer elektromagnetischer Felder erwärmt wird.

4. Vorrichtung zur Durchführung des Verfahrens nach einem oder mehreren der Ansprüche 1 bis 3, gekennzeichnet durch jeweils wenigstens ein in der Freistrecke zwischen Beschichtungskopf (5) und Kühlvorrichtung (8) angeordnetes vertikales und horizontales Magnetjochpaar (22, 23, 24, 25).

## Claims

1. A process for laminating metallic, continuous drawn forms that have been pre-treated chemically or mechanically and in cases have an adhesive mediator with plastic or a similar substance. The process involves direct contact between the heated continuous form and plastic in powder form. The powder on the fritted heated surface is then melted into a uniform plastic coating and the thus laminated continuous form subsequently cooled. The process is characterized by the continuous form being supported and controlled by means of steerable electromagnetic fields, ensuring contact-free lamination

2. A process, in terms of Claim 1 above, characterized by transportation of the continuous form by means of steerable electromagnetic travelling-waves.

3. A process, in terms of Claims 1 or 2 above, characterized by the fact that the continuous form is heated by means of electromagnetic fields.

4. A facility with which to conduct the process in terms of one or more of the above Claims, characterized by the presence of at least one vertically or horizontally placed pair of magnetic yokes (22, 23, 24, 25) located in the unused section between lamination head (5) and cooling device (8).

## Revendications

1. Procédé de recouvrement de corps métalliques continus préalablement traités chimiquement ou mécaniquement et pourvus, le cas échéant, d'une surface de contact, par du plastique ou une matière similaire. Ce procédé est obtenu par un contact direct entre le corps continu préalablement chauffé et de la poudre synthétique; celle-ci est, après le frittage d'une quantité définie de poudre synthétique, fondue en une couche de plastique homogène sur la surface chauffée. Le corps continu ainsi recouvert sera ensuite refroidi. Ce procédé est caractérisé par le fait que ce corps continu sera porté et conduit par des champs électromagnétiques dirigeables, sans pour autant subir un contact direct.

2. Selon la disposition no. 1, le procédé est caractérisé par le fait que le corps continu sera transporté à l'aide de champs électromagnétiques mouvants et dirigeables.

3. Selon les dispositions no. 1 et/ou 2, le procédé est caractérisé par le fait que le corps continu sera chauffé à l'aide de champs électromagnétiques dirigeables.

4. Le dispositif de réalisation du procédé selon l'une ou plusieurs des dispositions no. 1 à 3 est caractérisé par la présence d'au moins une paire de culasses magnétiques (22, 23, 24, 25) fixée verticalement et horizontalement dans la zone libre entre la tête de recouvrage (5) et le dispositif de refroidissement (8).

Fig.1

Fig.2

Fig.3